# EUROPEAN PATENT APPLICATION

(11) **EP 4 800 932 A1**
(43) Date of publication of application: **02.09.2026**
(21) Application number: 25160958.2
(22) Date of filing: 28.02.2025
(51) Int. Cl.: H04B 5/26, H04B 5/40, H04B 5/79

(54) **NFC DEVICE AND OPERATING METHOD THEREOF**

(71) Applicant: NXP B.V., 5656 AG Eindhoven (NL)
(72) Inventor: Haslinger, Dorian, 5656 AG Eindhoven (NL); Neophytou, Kyriakos, 5656 AG Eindhoven (NL)
(74) Representative: Krott, Michel

(57) **Abstract**

In accordance with a first aspect of the present disclosure, a near field communication (NFC) device is provided, comprising: an NFC antenna; a first transmitter operatively coupled to the NFC antenna; a second transmitter operatively coupled to the NFC antenna; a controller operatively coupled to the first transmitter and the second transmitter; wherein the NFC antenna comprises a first part and a second part, the first part extending from the first transmitter to a ground connection of said NFC antenna, and the second part extending from said ground connection to the second transmitter; wherein the controller is configured to cause the first transmitter to feed the first part of the NFC antenna while the second transmitter does not feed the second part of the NFC antenna, and to cause the second transmitter to feed the second part of the NFC antenna while the first transmitter does not feed the first part of the NFC antenna. In accordance with a second aspect of the present disclosure, a corresponding method of operating an NFC device is conceived.

## Description

### TECHNICAL FIELD

The present disclosure relates to a near field communication (NFC) device. Furthermore, the present disclosure relates to a corresponding method of operating an NFC device.

### BACKGROUND

Near field communication (NFC) devices may be used in various applications, for example wireless charging applications in an automotive context. Such NFC devices typically include an NFC antenna operatively coupled to an NFC integrated circuit (IC). In specific applications and use cases, it is important that the correct operation of the NFC antenna can be tested and verified at any time (e.g., during production of the NFC device, or when it being used in the field). In particular, an NFC IC may fail to produce a magnetic field in case of, for example, a disconnected antenna, a broken antenna, or an IC malfunction. Therefore, the antenna functionality and field presence should be verified. This is particularly important, because the failure of activating the NFC field may lead to fatal errors of the NFC device and thus to user dissatisfaction.

### SUMMARY

In accordance with a first aspect of the present disclosure, a near field communication (NFC) device is provided, comprising: an NFC antenna; a first transmitter operatively coupled to the NFC antenna; a second transmitter operatively coupled to the NFC antenna; a controller operatively coupled to the first transmitter and the second transmitter; wherein the NFC antenna comprises a first part and a second part, the first part extending from the first transmitter to a ground connection of said NFC antenna, and the second part extending from said ground connection to the second transmitter; wherein the controller is configured to cause the first transmitter to feed the first part of the NFC antenna while the second transmitter does not feed the second part of the NFC antenna, and to cause the second transmitter to feed the second part of the NFC antenna while the first transmitter does not feed the first part of the NFC antenna.

In one or more embodiments, the NFC device further comprises a first receiver operatively coupled to the first part of the NFC antenna and a second receiver operatively coupled to the second part of the NFC antenna.

In one or more embodiments, the first receiver is configured to receive a first signal through the first part of the NFC antenna while the second transmitter feeds the second part of the NFC antenna.

In one or more embodiments, the second receiver is configured to receive a second signal through the second part of the NFC antenna while the first transmitter feeds the first part of the NFC antenna.

In one or more embodiments, the controller is further configured to conclude that the NFC antenna is operational if the first receiver has received the first signal and the second receiver has received the second signal.

In one or more embodiments, the controller is further configured to conclude that the NFC antenna is not operational if the first receiver has not received the first signal and/or the second receiver has not received the second signal.

In one or more embodiments, the NFC antenna is a dual-loop antenna.

In one or more embodiments, the first part of the NFC antenna and the second part of the NFC antenna have a substantially equal length.

In one or more embodiments, a charging device comprises an NFC device of the kind set forth.

In accordance with a second aspect of the present disclosure, a method of operating a near field communication (NFC) device is conceived, wherein the NFC device comprises an NFC antenna, a first transmitter operatively coupled to the NFC antenna, a second transmitter operatively coupled to the NFC antenna, a controller operatively coupled to the first transmitter and the second transmitter, the method comprising: causing, by the controller, the first transmitter to feed a first part of the NFC antenna while the second transmitter does not feed a second part of the NFC antenna, the first part extending from the first transmitter to a ground connection of said NFC antenna, and the second part extending from said ground connection to the second transmitter; causing, by the controller, the second transmitter to feed the second part of the NFC antenna while the first transmitter does not feed the first part of the NFC antenna.

In one or more embodiments, the NFC device further comprises a first receiver operatively coupled to the first part of the NFC antenna and a second receiver operatively coupled to the second part of the NFC antenna.

In one or more embodiments, the first receiver receives a first signal through the first part of the NFC antenna while the second transmitter feeds the second part of the NFC antenna.

In one or more embodiments, the second receiver is configured to receive a second signal through the second part of the NFC antenna while the first transmitter feeds the first part of the NFC antenna.

In one or more embodiments, the controller concludes that the NFC antenna is operational if the first receiver has received the first signal and the second receiver has received the second signal.

In one or more embodiments, the controller concludes that the NFC antenna is not operational if the first receiver has not received the first signal and/or the second receiver has not received the second signal.

### DESCRIPTION OF DRAWINGS

Embodiments will be described in more detail with reference to the appended drawings.
Fig. 1 shows an example implementation of an NFC device.
Fig. 2 shows an illustrative embodiment of an NFC device.
Fig. 3 shows an illustrative embodiment of a method of operating an NFC device.
Fig. 4 shows another illustrative embodiment of an NFC device.
Fig. 5 shows a conceptual view of the NFC device shown in Fig. 4.
Fig. 6 shows a current flow through the NFC device shown in Fig. 4.
Fig. 7 shows another illustrative embodiment of a method of operating an NFC device.

### DESCRIPTION OF EMBODIMENTS

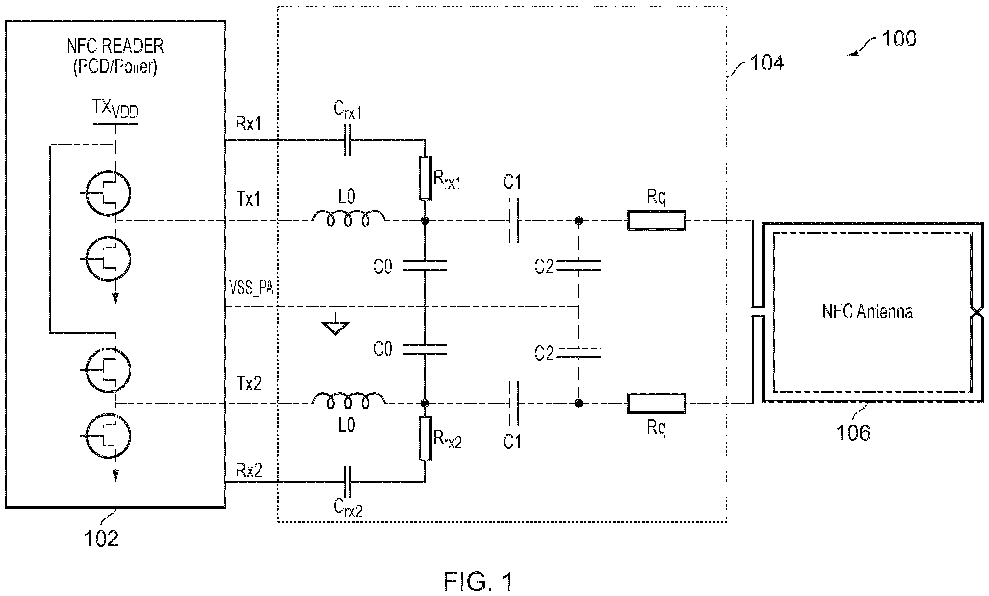

**Fig. 1** shows an example implementation of an NFC device 100. In particular, a typical implementation of an NFC device used for wireless charging applications is shown. The NFC device 100 comprises an NFC reader IC 102, which is operatively coupled to an NFC antenna 106 through a matching circuit 104. In this example, the NFC antenna 106 includes an inner loop and an outer loop which are connected to each other, thereby forming a single antenna which covers a relatively large area. In particular, the NFC antenna 106 is a differential antenna, more specifically an antenna which is fed differentially by two separate transmitters. This results in a practical implementation of the NFC device 100. However, it may be difficult to test whether the NFC antenna 106 is operational, without adding special test circuitry to the NFC device 100.

Now discussed are an NFC device and a corresponding method of operating an NFC device, which facilitate testing whether an NFC antenna integrated into the NFC device is operational, without adding a significant amount of circuitry to the NFC device. The NFC device may, for example, be integrated into a charging device.

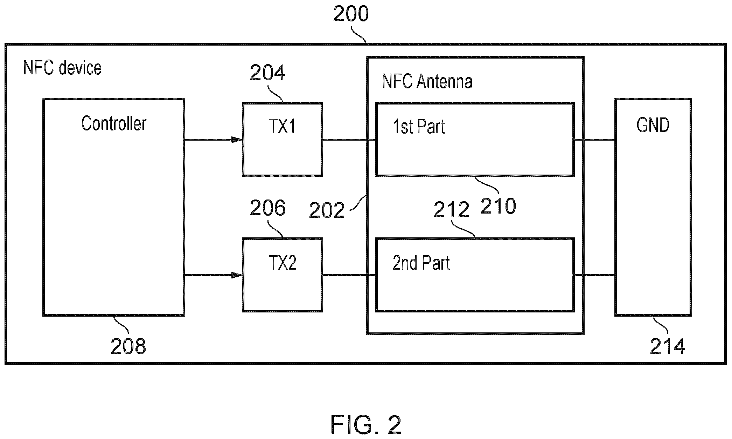

**Fig. 2** shows an illustrative embodiment of an NFC device 200. The NFC device 200 comprises an NFC antenna 202, a first transmitter 204 operatively coupled to the NFC antenna 202, and a second transmitter 206 operatively coupled to the NFC antenna 202. Furthermore, the NFC device 200 comprises a controller 208 operatively coupled to the first transmitter 206 and to the second transmitter 206. The NFC antenna 202 comprises a first part 210 and a second part 212, the first part 210 extending from the first transmitter 204 to a ground connection 214 of said NFC antenna 202, and the second part 212 extending from said ground connection 214 to the second transmitter 206. Furthermore, the controller 208 is configured to cause the first transmitter 204 to feed the first part 210 of the NFC antenna 202 while the second transmitter 206 does not feed the second part 212 of the NFC antenna 202, and to cause the second transmitter 206 to feed the second part 212 of the NFC antenna 202 while the first transmitter 204 does not feed the first part 210 of the NFC antenna 202. By adding the ground connection 214 to the NFC device 200 the NFC antenna 202 is effectively split into two parts 210, 212, each of which may be fed in a single-ended mode by the respective transmitters 204, 206. In this way, it may easily be tested whether the NFC antenna 202 is operational, without adding a significant amount of circuitry to the NFC device 200. The skilled person will appreciate that the two transmitters 204, 296 may be implemented in different ways, for example as two separate physical transmission units (e.g., two separate hardware units), or are as two functional transmission units (e.g., transmission drivers) integrated into a single physical unit.

In one or more embodiments, the NFC device further comprises a first receiver operatively coupled to the first part of the NFC antenna and a second receiver operatively coupled to the second part of the NFC antenna. This further facilitates testing whether the NFC antenna is operational. In particular, each of the receivers may be used to receive a signal induced in a part of the NFC antenna, while the transmitters feeds the other part of the NFC antenna. The skilled person will appreciate that the two receivers may be implemented in different ways, for example as two separate physical reception units, or are as two functional reception units integrated into a single physical unit. In a practical implementation, the first receiver is configured to receive a first signal through the first part of the NFC antenna while the second transmitter feeds the second part of the NFC antenna. Furthermore, in a practical implementation, the second receiver is configured to receive a second signal through the second part of the NFC antenna while the first transmitter feeds the first part of the NFC antenna.

In one or more embodiments, the controller is further configured to conclude that the NFC antenna is operational if the first receiver has received the first signal and the second receiver has received the second signal. This further facilitates testing whether the NFC antenna is operational. In one or more embodiments, the controller is further configured to conclude that the NFC antenna is not operational if the first receiver has not received the first signal and/or the second receiver has not received the second signal. This further facilitates testing whether the NFC antenna is operational. In one or more embodiments, the NFC antenna is a dual-loop antenna. In an antenna having such a structure, a ground connection can easily be implemented. Furthermore, in one or more embodiments, the first part of the NFC antenna and the second part of the NFC antenna have a substantially equal length. This further facilitates testing whether the NFC antenna is operational.

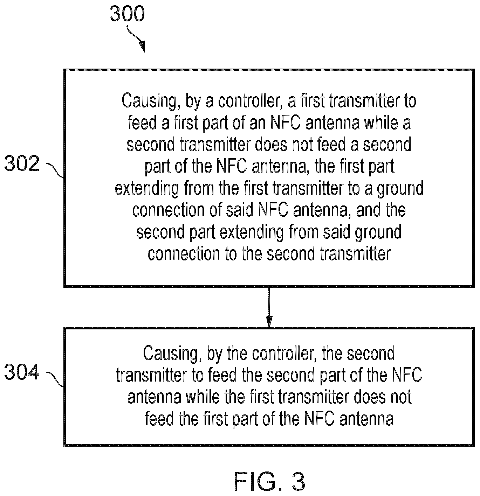

**Fig. 3** shows an illustrative embodiment of a method 300 of operating an NFC device. The method 300 comprises the following steps. At 302, a controller causes a first transmitter to feed a first part of an NFC antenna while a second transmitter does not feed a second part of the NFC antenna, the first part extending from the first transmitter to a ground connection of said NFC antenna, and the second part extending from said ground connection to the second transmitter. Furthermore, at 304, the controller causes the second transmitter to feed the second part of the NFC antenna while the first transmitter does not feed the first part of the NFC antenna. As mentioned with reference to the corresponding NFC device shown in Fig. 2, this facilitates testing whether the NFC antenna is operational, without adding a significant amount of circuitry to the NFC device.

In accordance with the present disclosure, a NFC antenna integrated into an NFC device may be grounded in such a way that the NFC antenna is split into two parts. For example, in a practical implementation, an NFC antenna may be composed of a single wire which is grounded substantially in the middle of the wire, such that the NFC antenna is split into two parts having a substantially equal length. By adding the ground connection to the NFC antenna, it may be driven in a single-ended mode as well as in a differential mode, without needing to change any components. In a default operation, the differential mode may be used. However, when the antenna test is performed, only one transmitter may be enabled (e.g., TX1) and thus only one part of the antenna is used for the transmission of a signal. A receiver (e.g., RX2) may then receive this signal through the other part of the antenna. The test may be done at least two times, i.e., using both transmitters in a single-ended mode, in order to verify that both TX and RX paths are operational as intended.

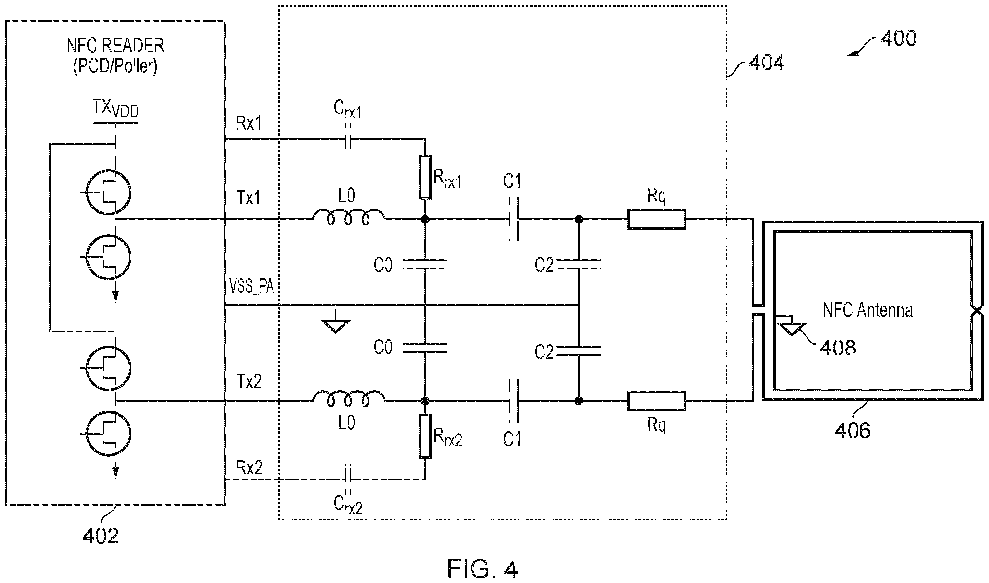

**Fig. 4** shows another illustrative embodiment of an NFC device 400. The NFC device 400 comprises an NFC reader IC 402, which is operatively coupled to an NFC antenna 406 through a matching circuit 404. In this embodiment, the NFC antenna 406 includes an inner loop and an outer loop which are connected to each other, thereby forming a single antenna which covers a relatively large area. In particular, the NFC antenna 406 is a differential antenna, more specifically an antenna which may be fed differentially by two separate transmitters. However, the NFC antenna 406 also has a ground connection 408, which effectively splits the NFC antenna 406 into two parts, each of which may be fed separately by a transmitter, while the other part is not being fed. In other words, each part of the NFC antenna 406 may be fed in a single-ended mode. In this way, the correct operation of the NFC antenna 406, as well as the correct operation of matching circuit 404, may easily be verified. In this embodiment, the NFC antenna 406 is grounded at its center. By grounding the NFC antenna 406 substantially in the middle, it may be driven in a single-ended mode by the respective transmitters, without significantly impacting the operation of the default differential mode.

In particular, the presence of a physical ground in the middle enables performing the self-test in the single-ended mode. In addition, it also avoids a negative impact on the performance of the NFC device 400 when it operates in a regular mode (i.e., the differential mode), because in that mode there would be a virtual ground in the center. As shown in Fig. 4, the NFC antenna 406 may be implemented as a dual-loop antenna, consisting of a single wire forming an outer loop and an inner loop. In such an implementation, the wire may be connected to physical ground in the middle of the inner loop, such that the NFC antenna 406 is effectively split into two parts having a substantially equal length. The skilled person will appreciate that, when splitting the NFC antenna 406 into two parts having a substantially equal length, a certain deviation or tolerance may be acceptable. Such deviation or tolerance may for example be derived from experiments.

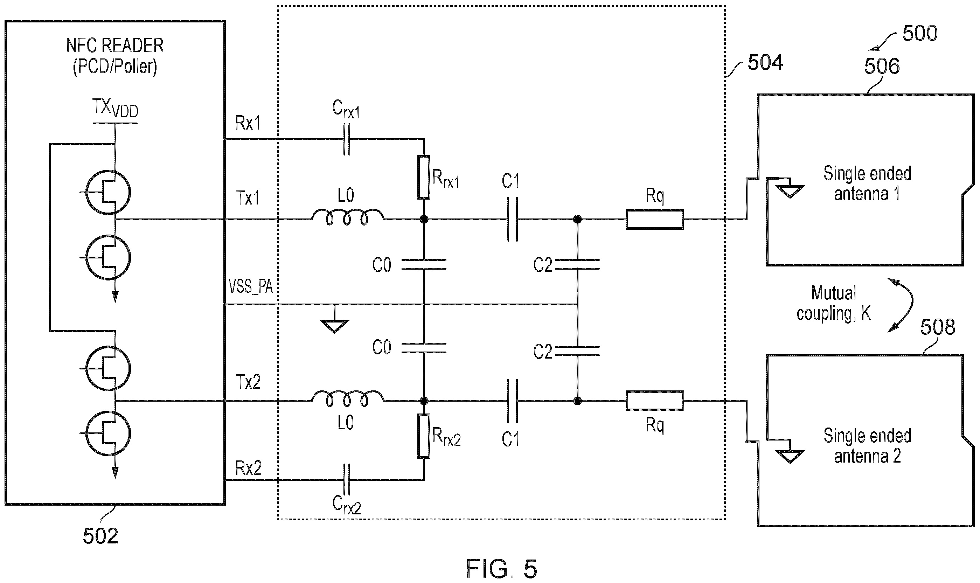

**Fig. 5** shows a conceptual view 500 of the NFC device shown in Fig. 4. As in Fig. 4, the NFC device comprises a reader IC 502 and a matching circuit 504. In this view 500, the first part 506 of the NFC antenna and the second part 508 of the NFC antenna are shown conceptually as two single-ended antennas. Thus, in other words, Fig. 5 shows how the NFC antenna is viewed in a single-ended operation. When driven by a single transmitter (i.e., TX1 or TX2) there are effectively two single-ended antennas.

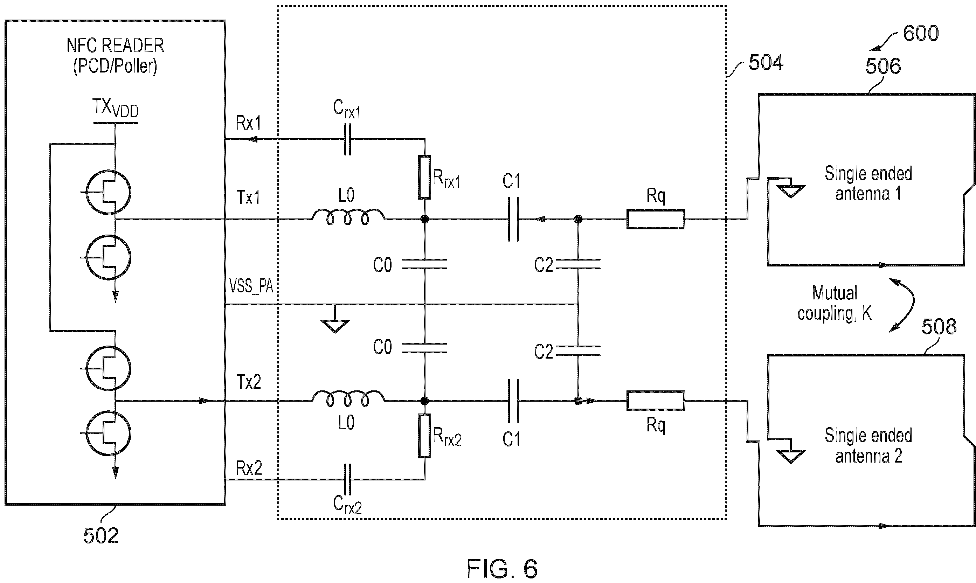

**Fig. 6** shows a current flow 600 through the NFC device shown in Fig. 4. By enabling a single-ended operation, one single-ended antenna (i.e., a first part of the NFC antenna) may capture the signal from the other single-ended antenna (i.e., a second part of the NFC antenna) due to their close proximity. The captured signal may then be checked by a receiver (i.e., RX1) of the reader IC 502. In Fig. 6, it is shown that the second transmitter (i.e., TX2) feeds the second part 508 of the NFC antenna, while the first transmitter (i.e., TX1) does not feed the first part 506 of the NFC antenna. Instead, the signal transmitted by the second transmitter is captured through the first part 506 of the NFC antenna. This may be repeated in the opposite direction: the first transmitter may feed the first part 506 of the NFC antenna, while the second transmitter does not feed the second part 508 of the NFC antenna and the signal transmitted by the first transmitter is captured through the second part 508 of the NFC antenna. Then, if the signals are captured in both instances it may be assumed that the NFC antenna is operational.

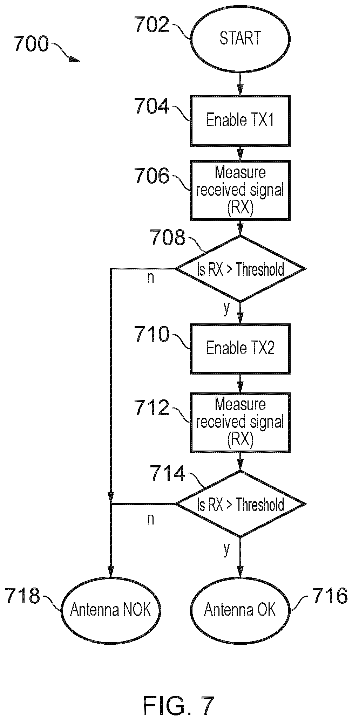

**Fig. 7** shows another illustrative embodiment of a method 700 of operating an NFC device. In particular, a more detailed operating method is shown, which may be implemented as a built-in self-test feature in an NFC device of the kind set forth. The method 700 starts at 702, enables 704 the first transmitter (TX1) and measures 706 the received signal. If the first part of the NFC antenna (i.e., single-ended antenna 1) generates the magnetic field correctly a certain received signal will be expected, having a strength (RX) that exceeds a predefined threshold. If the strength of the received signal exceeds 708 this threshold, the method 700 continues to the other transmitter path, by enabling 710 the second transmitter (TX2) and measuring 712 the received signal. Then, if the strength (RX) of the received signal exceeds 714 the predefined threshold the antenna is assumed 716 to be operational (antenna OK). In contrast, if the strength of the received signal is lower than the threshold if the first transmitter and/or the second transmitter generates the magnetic field, then the antenna is assumed to be non-operational (antenna not OK) and a further investigation may be needed.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: NFC device
- 102: NFC reader IC
- 104: matching circuit
- 106: NFC antenna
- 200: NFC device
- 202: NFC antenna
- 204: first transmitter
- 206: second transmitter
- 208: controller
- 210: first part of NFC antenna
- 212: second part of NFC antenna
- 214: ground connection
- 300: method of operating an NFC device
- 302: causing, by a controller, a first transmitter to feed a first part of an NFC antenna while a second transmitter does not feed a second part of the NFC antenna, the first part extending from the first transmitter to a ground connection of said NFC antenna, and the second part extending from said ground connection to the second transmitter
- 304: causing, by the controller, the second transmitter to feed the second part of the NFC antenna while the first transmitter does not feed the first part of the NFC antenna
- 400: NFC device
- 402: NFC reader IC
- 404: matching circuit
- 406: NFC antenna
- 408: ground connection
- 500: conceptual view of NFC device
- 502: reader IC
- 504: matching circuit
- 506: first part of NFC antenna (single ended antenna 1)
- 508: second part of NFC antenna (single ended antenna 2)
- 600: current flow through NFC device
- 700: method of operating an NFC device
- 702: start
- 704: enable TX1
- 706: measure received signal (RX)
- 708: is RX greater than threshold?
- 710: enable TX2
- 712: measure received signal (RX)
- 714: is RX greater than threshold?
- 716: antenna OK
- 718: antenna not OK

## Claims

1. A near field communication, NFC, device, comprising:
an NFC antenna;
a first transmitter operatively coupled to the NFC antenna;
a second transmitter operatively coupled to the NFC antenna;
a controller operatively coupled to the first transmitter and the second transmitter;
wherein the NFC antenna comprises a first part and a second part, the first part extending from the first transmitter to a ground connection of said NFC antenna, and the second part extending from said ground connection to the second transmitter;
wherein the controller is configured to cause the first transmitter to feed the first part of the NFC antenna while the second transmitter does not feed the second part of the NFC antenna, and to cause the second transmitter to feed the second part of the NFC antenna while the first transmitter does not feed the first part of the NFC antenna.

2. The NFC device of claim 1, further comprising a first receiver operatively coupled to the first part of the NFC antenna and a second receiver operatively coupled to the second part of the NFC antenna.

3. The NFC device of claim 2, wherein the first receiver is configured to receive a first signal through the first part of the NFC antenna while the second transmitter feeds the second part of the NFC antenna.

4. The NFC device of claim 2 or 3, wherein the second receiver is configured to receive a second signal through the second part of the NFC antenna while the first transmitter feeds the first part of the NFC antenna.

5. The NFC device of claims 3 and 4, wherein the controller is further configured to conclude that the NFC antenna is operational if the first receiver has received the first signal and the second receiver has received the second signal.

6. The NFC device of claim 5, wherein the controller is further configured to conclude that the NFC antenna is not operational if the first receiver has not received the first signal and/or the second receiver has not received the second signal.

7. The NFC device of any preceding claim, wherein the NFC antenna is a dual-loop antenna.

8. The NFC device of any preceding claim, wherein the first part of the NFC antenna and the second part of the NFC antenna have a substantially equal length.

9. A charging device comprising the NFC device of any preceding claim.

10. A method of operating a near field communication, NFC, device, wherein the NFC device comprises an NFC antenna, a first transmitter operatively coupled to the NFC antenna, a second transmitter operatively coupled to the NFC antenna, a controller operatively coupled to the first transmitter and the second transmitter, the method comprising:
causing, by the controller, the first transmitter to feed a first part of the NFC antenna while the second transmitter does not feed a second part of the NFC antenna, the first part extending from the first transmitter to a ground connection of said NFC antenna, and the second part extending from said ground connection to the second transmitter;
causing, by the controller, the second transmitter to feed the second part of the NFC antenna while the first transmitter does not feed the first part of the NFC antenna.

11. The method of claim 10, wherein the NFC device further comprises a first receiver operatively coupled to the first part of the NFC antenna and a second receiver operatively coupled to the second part of the NFC antenna.

12. The method of claim 11, wherein the first receiver receives a first signal through the first part of the NFC antenna while the second transmitter feeds the second part of the NFC antenna.

13. The method of claim 11 or 12, wherein the second receiver is configured to receive a second signal through the second part of the NFC antenna while the first transmitter feeds the first part of the NFC antenna.

14. The method of claims 12 and 13, wherein the controller concludes that the NFC antenna is operational if the first receiver has received the first signal and the second receiver has received the second signal.

15. The method of claim 14, wherein the controller concludes that the NFC antenna is not operational if the first receiver has not received the first signal and/or the second receiver has not received the second signal.

## Amended claims

### Amended claims in accordance with Rule 137(2) EPC.

1. A near field communication, NFC, device (200, 400), comprising:
an NFC antenna (202, 406);
a first transmitter (204) operatively coupled to the NFC antenna (202, 406);
a second transmitter (206) operatively coupled to the NFC antenna (202, 406);
a controller (208) operatively coupled to the first transmitter (204) and the second transmitter (206);
wherein the NFC antenna (202) comprises a first part (210) and a second part (212), the first part (210) extending from the first transmitter (204) to a ground connection (214, 408) of said NFC antenna (202, 406), and the second part (212) extending from said ground connection (214, 408) to the second transmitter (206);
wherein the controller (208) is configured to enable the first transmitter (204) to transmit through the first part (204) of the NFC antenna (202, 406)when the second transmitter (206) is not enabled to transmit through the second part (206) of the NFC antenna (202, 406), and to enable the second transmitter (206) to transmit through the second part (212) of the NFC antenna (202, 406) when the first transmitter (204) is not enabled to transmit through the first part (210) of the NFC antenna (202, 406);
**characterized in that** the NFC antenna (202, 406) is a dual-loop antenna consisting of a single wire forming an outer loop and an inner loop, wherein the wire is connected to physical ground in the middle of the inner loop, such that the first part (210) of the NFC antenna (202, 406) and the second part (212) of the NFC antenna (202, 406) have a substantially equal length.

2. The NFC device (200, 400) of claim 1, further comprising a first receiver operatively coupled to the first part (210) of the NFC antenna (202, 406) and a second receiver operatively coupled to the second part (212) of the NFC antenna (202, 406).

3. The NFC device (200, 400) of claim 2, wherein the first receiver is configured to receive a first signal through the first part (210) of the NFC antenna (202, 406) when the second transmitter (206) transmits through the second part (212) of the NFC antenna (202, 406).

4. The NFC device (200, 400) of claim 2 or 3, wherein the second receiver is configured to receive a second signal through the second part (212) of the NFC antenna (202, 406) when the first transmitter (204) transmits through the first part (210) of the NFC antenna (202, 406).

5. The NFC device (200, 400) of claims 3 and 4, wherein the controller (208) is further configured to conclude that the NFC antenna (202, 406) is operational if the first receiver has received the first signal and the second receiver has received the second signal.

6. The NFC device (200, 400) of claim 5, wherein the controller (208) is further configured to conclude that the NFC antenna (202, 406) is not operational if the first receiver has not received the first signal and/or the second receiver has not received the second signal.

7. A charging device comprising the NFC device (200, 400) of any preceding claim.

8. A method (300) of operating a near field communication, NFC, device, wherein the NFC device comprises an NFC antenna, a first transmitter operatively coupled to the NFC antenna, a second transmitter operatively coupled to the NFC antenna, a controller operatively coupled to the first transmitter and the second transmitter, the method comprising:
enabling (302), by the controller, the first transmitter to transmit through a first part of the NFC antenna when the second transmitter does not transmit through a second part of the NFC antenna, the first part extending from the first transmitter to a ground connection of said NFC antenna, and the second part extending from said ground connection to the second transmitter;
enabling (304), by the controller, the second transmitter to transmit through the second part of the NFC antenna when the first transmitter does not transmit through the first part of the NFC antenna;
**characterized in that** the NFC antenna is a dual-loop antenna consisting of a single wire forming an outer loop and an inner loop, wherein the wire is connected to physical ground in the middle of the inner loop, such that the first part of the NFC antenna and the second part of the NFC antenna have a substantially equal length.

9. The method (300) of claim 8, wherein the NFC device further comprises a first receiver operatively coupled to the first part of the NFC antenna and a second receiver operatively coupled to the second part of the NFC antenna.

10. The method (300) of claim 9, wherein the first receiver receives a first signal through the first part of the NFC antenna when the second transmitter transmits through the second part of the NFC antenna.

11. The method (300) of claim 9 or 10, wherein the second receiver receives a second signal through the second part of the NFC antenna when the first transmitter transmits through the first part of the NFC antenna.

12. The method (300) of claims 10 and 11, wherein the controller concludes that the NFC antenna is operational if the first receiver has received the first signal and the second receiver has received the second signal.

13. The method (300) of claim 12, wherein the controller concludes that the NFC antenna is not operational if the first receiver has not received the first signal and/or the second receiver has not received the second signal.
